# FASCICULE DE BREVET EUROPEEN

(11) **EP 1 223 078 B1**
(45) Date de publication et mention de la délivrance du brevet: **28.05.2008**
(21) Numéro de dépôt: 02370002.4
(22) Date de dépôt: 09.01.2002
(51) Int. Cl.: B60P 7/08

(54) **Dispositif d'enroulement à commande manuelle d'un élément enroulable**
Wickelvorrichtung
Winding device

(30) Priorité: 15.01.2001 FR 0100474
(43) Date de publication de la demande: 17.07.2002
(73) Titulaire: Thiriet Fils Société Anonyme, 08000 Warcq (FR)
(72) Inventeur: Thiriet, Philippe, 08420 Warcq (FR)
(74) Mandataire: Duthoit, Michel Georges André

(56) Documents cités:
- EP-A- 0 104 155
- GB-A- 2 016 625
- US-A- 6 105 211
- US-A- 6 139 234

## Description

La présente invention concerne un dispositif d'enroulement à commande manuelle d'un élément enroulable, tel que, par exemple, câble, filin, film, nappe, toile ou bâche, autour d'un arbre ou d'un tambour d'enroulement.

Cette invention trouve son application dans de nombreux domaines où il est nécessaire, pour des raisons quelconques, de procéder à l'enroulement et/ou au déroulement d'un élément.

Par exemple, dans le domaine du transport, il est connu des caisses de camions ou remorques, utilisées pour le transport de marchandises, équipées de bâches, pour protéger ces dernières. Pour faciliter le chargement et/ou le déchargement des marchandises, il est courant de rendre les bâches amovibles afin de pouvoir les ôter ou les replacer rapidement.

Ces bâches sont par exemple suspendues par des chariots coulissants dans un rail, comme des rideaux. La bâche est ensuite tendue, lorsqu'elle est déployée en divers points de la caisse.

Une autre possibilité consiste à prévoir l'enroulement des bâches latérales autour d'un arbre disposé verticalement, qu'il est alors nécessaire de mettre en rotation, dans un sens ou dans l'autre, pour soit enrouler, soit dérouler la bâche.

C'est ainsi qu'il est connu un dispositif du type précité comprenant :
- un support fixe définissant deux flasques, entre lesquels est monté tourillonnant un axe d'entraînement, apte à être assujetti audit arbre ou tambour,
- un levier de manoeuvre, présentant une tête, et monté oscillant sur ledit axe d'entraînement entre les deux dits flasques,
- un mécanisme à encliquetage coopérant, avec ledit axe d'entraînement et ledit levier de manoeuvre, pour commander l'enroulement ou le déroulement dudit élément enroulable, le mécanisme étant disposé au niveau de ladite tête prévue entre lesdits flasques.

Dans ce dispositif connu, la protection du mécanisme à encliquetage, à savoir notamment un pignon denté et des cliquets, est assurée uniquement par le fait que les deux flasques formant le support fixe se rejoignent à leur partie inférieure en formant un U. Si une protection latérale est assurée, il n'y a pas de protection totale du mécanisme, ce qui peut constituer par ailleurs un danger pour l'utilisateur ou pour les organes mécaniques voisins dudit dispositif.

Pour éviter cet inconvénient, on aurait pu imaginer de retourner le dispositif à 180 °, mais ceci présente l'inconvénient majeur de limiter le débattement angulaire du levier de manoeuvre butant nécessairement, contre la paroi transversale reliant les flasques du support fixe.

On connaît, par ailleurs, du document US-6.105.211 un dispositif d'enroulement et de déroulement selon le préambule de la revendication 1.

Ce dispositif connu est prévu pour raccourcir une ceinture de sécurité et présente une structure comprenant une base à partir de laquelle s'étendent deux bords latéraux. Un axe d'enroulement est articulé en pivot entre les bords, assujetti à un pignon du type roue à crochet et peut être actionné en rotation par une poignée. Un premier cliquet de la poignée, débrayable en translation, contraint par un ressort sur le pignon, permet d'entraîner l'axe dans un sens d'oscillation de la poignée, dit d'enroulement. Le premier cliquet échappe la denture du pignon dans l'autre sens, un deuxième cliquet, d'arrêt, s'opposant alors au déroulement de la ceinture.

De plus, selon le dispositif connu précité pour l'enroulement de bâches, un autre inconvénient réside dans le fait que l'un des cliquets est manoeuvrable par l'intermédiaire d'un levier de débrayage s'étendant à partir de son articulation vers l'extérieur de la chape, sur le côté supérieur dudit levier de manoeuvre. Il s'en suit que le levier de débrayage dudit cliquet n'est donc pas protégé et de plus il favorise l'introduction d'eau, par exemple, mais également de salissures diverses à l'intérieur du dispositif.

Un des buts de la présente invention est de pallier les inconvénients précités inhérents à la non protection efficace du mécanisme.

Un autre but de la présente invention est de proposer un dispositif d'enroulement à commande manuelle, compact et résistant, permettant l'enroulement d'un élément enroulable tel que, par exemple, câble, filin, film, nappe, toile ou bâche, autour d'un arbre ou tambour qui permette une telle mise en oeuvre.

L'un des buts de la présente invention est de proposer un dispositif d'enroulement à commande manuelle qui soit commode d'utilisation pour l'opérateur et qui présente une grande robustesse aux chocs ainsi qu'une bonne fiabilité et puissance.

Un autre but de l'invention est de proposer un dispositif d'enroulement d'encombrement réduit, n'ayant pas de conséquence néfaste sur les dimensions du véhicule, par exemple, et conséquemment sur le volume utile de sa caisse ou de sa remorque.

Un autre but de l'invention est de proposer un dispositif d'enroulement qui soit réversible afin de permettre le libre choix de sa mise en place à droite ou à gauche.

Bien que plus spécialement développée pour les applications précitées, la présente invention n'est toutefois nullement limitée à celle-ci et peut, d'une façon générale, permettre l'enroulement d'un élément souple ou semi-rigide autour d'un arbre ou tambour.

La présente invention a pour but de remédier aux inconvénients précités et concerne, à cet effet, un dispositif d'enroulement à commande manuelle d'un élément enroulable, tel que, par exemple, câble, filin, film, nappe, toile ou bâche, autour d'un arbre ou tambour d'enroulement, ledit dispositif comprenant :
- un support fixe (5), définissant deux flasques (3, 4), entre lesquels est monté tourillonnant un axe d'entraînement(6), apte à être assujetti audit arbre ou tambour (2),
- un levier de manoeuvre (8), présentant une tête (7), et monté oscillant sur ledit axe d'entraînement (6), entre les deux dits flasques (3, 4),
- un mécanisme à encliquetage (11, 12. 13), coopérant avec ledit axe d'entraînement (6) et ledit levier de manoeuvre (8), pour commander l'enroulement ou le déroulement dudit élément enroulable, le mécanisme étant disposé au niveau de ladite tête (7) entre lesdits flasques (3, 4), ladite tête (7) du levier de manoeuvre (8) constituant en outre un carénage de protection (17) recouvrant le mécanisme à encliquetage (11, 12, 13), la tête (7) du levier de manoeuvre étant formée par une chape présentant deux branches (9, 10) disposées entre les deux dits flasques (3, 4) et entre lesquelles branches est disposé un pignon denté (11), solidaire dudit axe d'entraînement (6), ledit levier de manoeuvre (8) agissant sur ledit pignon (11) par l'intermédiaire d'un premier cliquet (12), solidaire du levier de manoeuvre (8), et coopérant avec le pignon denté (11), pour l'entraîner en rotation selon un sens d'oscillation du levier (8), et non dans l'autre sens correspondant à son retour par débrayage vers son point de départ, et d'un second cliquet (13), coopérant également avec le pignon denté (11), indépendamment du levier de manoeuvre (8), et permettant le libre entraînement en rotation du pignon denté (11) par engrènement dans un sens d'oscillation du levier (8), et sa retenue dans l'autre sens correspondant à son retour par débrayage.

Selon l'invention, le premier cliquet (12) est débrayable par l'intermédiaire d'un levier de débrayage (18) s'articulant sur un axe d'articulation (19), disposé entre les deux branches (9 et 10) de la chape et excentré par rapport à l'axe d'entraînement (6), lequel levier s'étend à partir de son articulation (19) vers l'extérieur de la chape en direction du levier de manoeuvre (8) sous le carénage (17) duquel il est susceptible de se loger selon son axe longitudinal, lors d'une action en débrayage

La présente invention concerne également les caractéristiques qui ressortiront au cours de la description qui va suivre.

Cette description donnée à titre d'exemple non limitatif fera mieux comprendre comment l'invention peut être réalisée en référence aux dessins annexés sur lesquels :

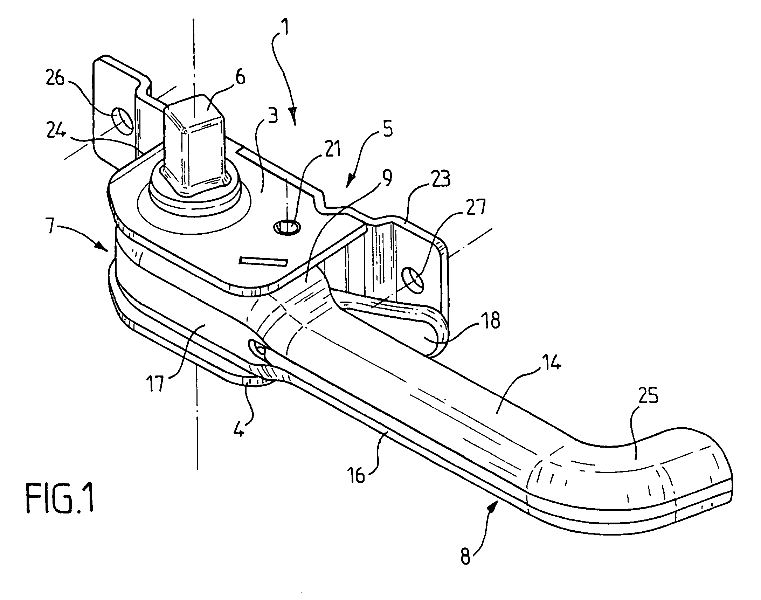

- la figure 1 est une vue en perspective du dispositif d'enroulement selon l'invention, en position rabattue,

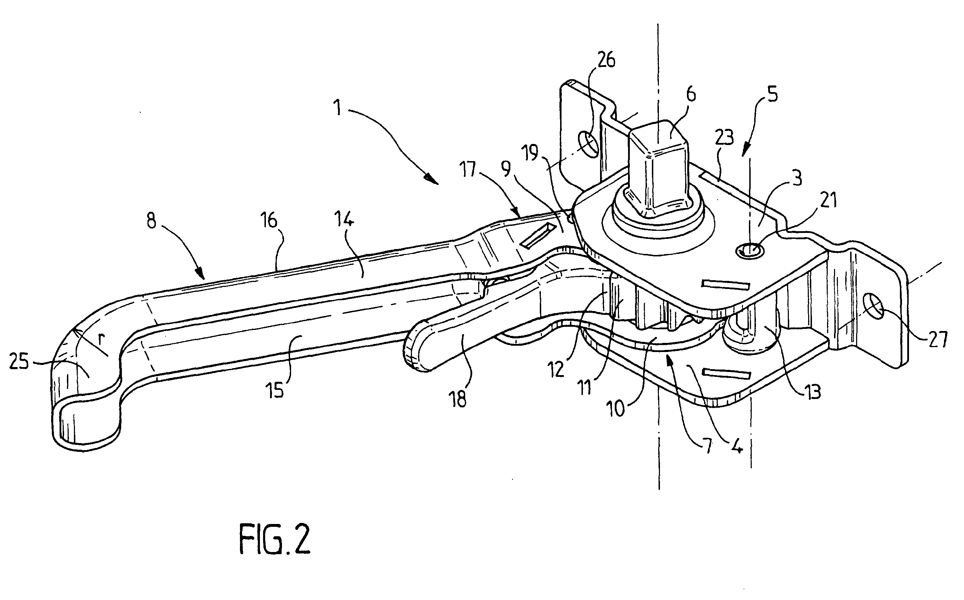

- la figure 2 est une vue en perspective du dispositif d'enroulement selon l'invention, en position levée,
- la figure 3 est une vue de côté du dispositif d'enroulement selon l'invention,
- la figure 4 est une vue de dessus du dispositif selon la figure 3 montrant les organes constitutifs du dispositif.

Le dispositif d'enroulement 1 globalement désigné sur les figures est destiné à commander manuellement un élément enroulable autour d'un arbre ou tambour d'enroulement 2.

Ce dispositif 1 comprend un support fixe 5, définissant deux flasques 3 et 4, notamment rigides et parallèles entre eux.

Entre les flasques 3 et 4 est monté tourillonnant un axe d'entraînement 6 apte à être assujetti audit tambour ou arbre d'enroulement 2.

Le dispositif 1 comporte, en outre, un levier de manoeuvre 8, présentant une tête 7, et monté oscillant dans ledit support 5. En particulier, la tête 7 est montée en libre rotation sur l'axe d'entraînement 6.

Le dispositif 1 comporte, également, un mécanisme à encliquetage 11, 12, 13, coopérant avec ledit axe d'entraînement 6 et ledit levier de manoeuvre 8, pour commander l'enroulement ou le déroulement dudit élément enroulable.

Ce mécanisme est notamment constitué d'un pignon denté 11, d'un premier et second cliquets 12, 13, et est disposé au niveau de la tête 7 entre lesdits flasques 3, 4 du support fixe 5.

Selon un mode de réalisation, représenté sur les figures, ladite tête 7 est formée par une chape à deux branches, notamment latérales et parallèles, 9 et 10, entre lesquelles est disposé le pignon denté 11.

Le pignon denté 11 est solidaire dudit axe d'entraînement 6, lui-même assujetti à l'arbre ou tambour d'enroulement 2.

Le levier de manoeuvre 8 agit sur ledit pignon 11 par l'intermédiaire :
- d'un premier cliquet 12 solidaire du levier de manoeuvre 8 et coopérant avec le pignon denté 11, pour l'entraîner en rotation selon un sens d'oscillation du levier 8, et non dans l'autre sens correspondant à son retour par débrayage vers son point de départ,
- d'un second cliquet 13, coopérant également avec le pignon denté 11, indépendamment du levier de manoeuvre 8, et permettant le libre entraînement en rotation du pignon denté 11 par engrènement dans un sens d'oscillation du levier 8, et sa retenue dans l'autre sens correspondant à son retour par débrayage.

Selon l'invention, ladite tête 7 du levier de manoeuvre 8 constitue, en outre, un carénage de protection 17 recouvrant le mécanisme à encliquetage 11, 12, 13.

Dans un mode de réalisation avantageux, le levier de manoeuvre oscillant 8 est constitué par un élément creux, de section globalement en U, se prolongeant, d'une part, par ses côtés latéraux 14 et 15 pour former les branches respectivement 9 et 10 de la chape constituant sa tête 7.

D'autre part, le levier de manoeuvre oscillant 8 se prolonge par son dos 16 pour relier lesdites branches 9 et 10 à leur partie supérieure et obtenir ainsi, d'un seul tenant, le carénage 17 de protection, recouvrant à la fois le pignon denté 11 et les premier et second cliquets 12 et 13.

En ce qui concerne le premier cliquet 12, celui-ci est débrayable par l'intermédiaire d'un levier de débrayage 18 s'articulant sur un axe d'articulation 19 disposé entre les deux branches 9 et 10 de la chape et excentré par rapport à l'axe d'entraînement 6. Ledit levier de débrayage 18 s'étend à partir de son articulation 19 vers l'extérieur de la chape, en direction du levier de manoeuvre 8, sous le carénage 17 duquel il est susceptible de se loger selon son axe longitudinal, lors d'une action en débrayage.

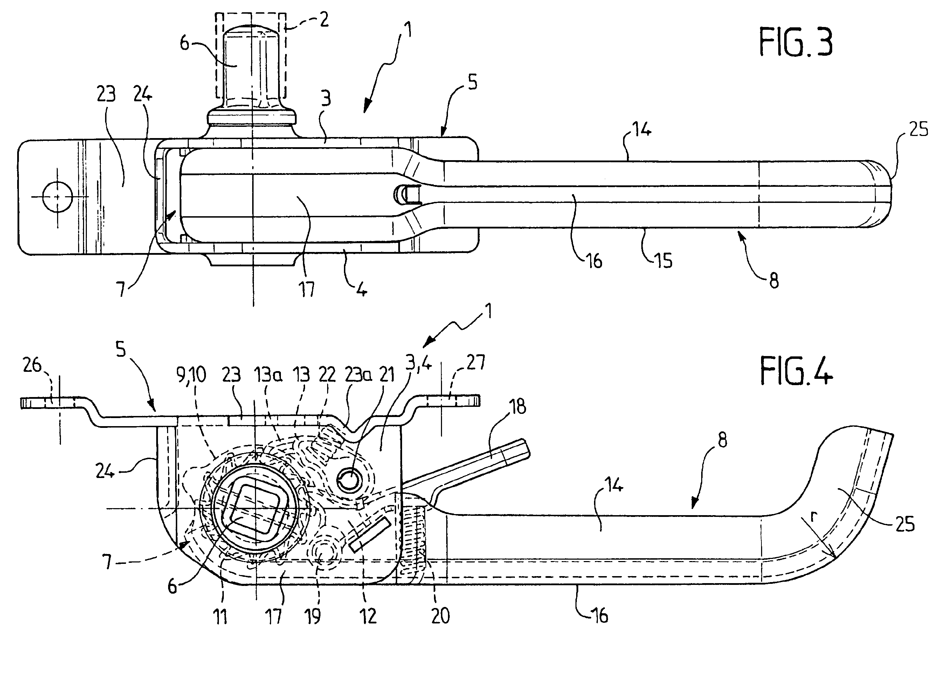

Comme le montre bien la figure 4, le premier cliquet 12 est rappelé élastiquement par l'intermédiaire d'un ressort à compression 20 interposé entre son levier de débrayage 18 et le levier de manoeuvre 8 à l'intérieur du carénage 17 qu'il forme.

Par ailleurs, les longueurs du levier de débrayage 18 et du levier de manoeuvre 8 sont, respectivement, plus courtes et plus longues, de manière à ce que le levier de manoeuvre 8 puisse être saisi à pleine main par un opérateur tout en lui laissant la possibilité d'agir sur celui de débrayage 18 avec la même main, afin d'offrir dans un cas comme dans l'autre une prise de préhension ergonomique dudit dispositif.

En ce qui concerne le second cliquet 13, celui-ci est monté pivotant sur un axe d'articulation 21 disposé entre les deux flasques 3 et 4 formant le support fixe 5, indépendamment du levier de manoeuvre 8, lequel axe 21 est également excentré par rapport à l'axe d'entraînement 6.

Le second cliquet 13 est rappelé élastiquement par l'intermédiaire d'un ressort à compression 22 interposé entre, d'une part, une partie intermédiaire dudit cliquet 13 située entre son extrémité 13a et son articulation 21, et d'autre part, une zone en vis-à-vis 23a d'une plaque inférieure de fixation 23 de l'ensemble. Cette plaque inférieure de fixation 23 forme avec les deux flasques 3 et 4 desquels elle est solidaire, le support fixe 5.

Plus précisément, les deux axes d'articulation 19 et 21 des premier et second cliquets 12 et 13 sont excentrés par rapport à l'axe d'entraînement 6 en direction du levier de manoeuvre 8, respectivement dans la zone supérieure de la chape proche du carénage 17 et dans la zone inférieure des flasques 3 et 4 proche d'une plaque de fixation 23 les réunissant et formant le support fixe 5.

Le support fixe 5 ainsi formé par les flasques rigides 3 et 4 et la plaque 23 est renforcé par le fait que lesdits flasques 3 et 4 sont reliés entre eux, à l'opposé du levier 8, par une aile transversale 24 afin de former une cage en U avec lesdits flasques 3 et 4. Ceci conforte en outre la protection du mécanisme à encliquetage 11, 12, 13.

Par ailleurs, la plaque de fixation 23 comporte deux trous de fixation 26 et 27 permettant la fixation de l'ensemble du dispositif.

Selon une autre caractéristique de l'invention, l'extrémité libre 25 du levier de manoeuvre 8 est recourbée vers l'intérieur selon un rayon de courbure « r » prédéterminé, de manière à améliorer son ergonomie, et à éviter l'accrochage de la poignée.

## Revendications

1. Dispositif d'enroulement (1) à commande manuelle d'un élément enroulable, tel que, par exemple, câble, filin, film, nappe, toile ou bâche, autour d'un arbre ou tambour d'enroulement (2), ledit dispositif comprenant :
- un support fixe (5), définissant deux flasques (3, 4), entre lesquels est monté tourillonnant un axe d'entraînement (6), apte à être assujetti audit arbre ou tambour (2),
- un levier de manoeuvre (8), présentant une tête (7), et monté oscillant sur ledit axe d'entraînement (6), entre les deux dits flasques (3, 4),
- un mécanisme à encliquetage (11, 12, 13), coopérant avec ledit axe d'entraînement (6) et ledit levier de manoeuvre (8), pour commander l'enroulement ou le déroulement dudit élément enroulable, le mécanisme étant disposé au niveau de ladite tête (7) entre lesdits flasques (3, 4), ladite tête (7) du levier de manoeuvre (8) constituant en outre un carénage de protection (17) recouvrant le mécanisme à encliquetage (11, 12, 13), la tête (7) du levier de manoeuvre étant formée par une chape présentant deux branches (9, 10) disposées entre les deux dits flasques (3, 4) et entre lesquelles branches est disposé un pignon denté (11), solidaire dudit axe d'entraînement (6), ledit levier de manoeuvre (8) agissant sur ledit pignon (11) par l'intermédiaire d'un premier cliquet (12), solidaire du levier de manoeuvre (8), et coopérant avec le pignon denté (11), pour l'entraîner en rotation selon un sens d'oscillation du levier (8), et non dans l'autre sens correspondant à son retour par débrayage vers son point de départ, et d'un second cliquet (13), coopérant également avec le pignon denté (11), indépendamment du levier de manoeuvre (8), et permettant le libre entraînement en rotation du pignon denté (11) par engrènement dans un sens d'oscillation du levier (8), et sa retenue dans l'autre sens correspondant à son retour par débrayage, **caractérisé en ce que** le premier cliquet (12) est débrayable par l'intermédiaire d'un levier de débrayage (18) s'articulant sur un axe d'articulation (19), disposé entre les deux branches (9 et 10) de la chape et excentré par rapport à l'axe d'entraînement (6), lequel levier s'étend à partir de son articulation (19) vers l'extérieur de la chape en direction du levier de manoeuvre (8) sous le carénage (17) duquel il est susceptible de se loger selon son axe longitudinal, lors d'une action en débrayage.

2. Dispositif selon la revendication 1, dans lequel le levier de manoeuvre (8) est constitué par un élément creux de section globalement en U se prolongeant, d'une part, par ses côtés latéraux (14, 15) pour former les branches (9, 10) de la chape constituant sa tête (7), et d'autre part, par son dos (16) pour relier lesdites branches (9, 10) à leur partie supérieure, et obtenir, d'un seul tenant, ledit carénage de protection (17) recouvrant à la fois le pignon denté (11) et les premier et second cliquets (12, 13).

3. Dispositif selon la revendication 1 ou 2, dans lequel le premier cliquet (12) est rappelé élastiquement par l'intermédiaire d'un ressort à compression (20), interposé entre son levier de débrayage (18) et le levier de manoeuvre (8).

4. Dispositif selon l'une des revendications 1 à 3, dans lequel les longueurs du levier de débrayage (18) et du levier de manoeuvre (8) sont respectivement plus courte et plus longue, de manière à ce que le levier de manoeuvre (8) puisse être saisi à pleine main par un opérateur, tout en lui laissant la possibilité d'agir sur celui de débrayage (18) avec la même main, afin d'offrir dans un cas comme dans l'autre une prise de préhension ergonomique dudit dispositif.

5. Dispositif selon l'une des revendications 1 à 4, dans lequel le second cliquet (13) est monté pivotant sur un axe d'articulation (21), disposé entre les deux flasques (3 et 4) formant le support fixe (5), indépendamment du levier de manoeuvre (8), lequel axe (21) est également excentré par rapport à l'axe d'entraînement (6).

6. Dispositif selon la revendication 5, dans lequel le second cliquet (13) est rappelé élastiquement par l'intermédiaire d'un ressort à compression (22), interposé entre, d'une part, une partie intermédiaire dudit cliquet située entre son extrémité (13a) et son articulation (21), et d'autre part, une zone en vis-à-vis (23a) d'une plaque inférieure de fixation (23) de l'ensemble, avec laquelle les deux flasques (3 et 4) sont solidaires pour former le support fixe (5).

7. Dispositif selon la revendication 6, dans lequel les deux axes d'articulation (19 et 21) des premier et second cliquets (12 et 13) sont excentrés par rapport à l'axe d'entraînement (6), en direction du levier de manoeuvre (8), respectivement dans la zone supérieure de la chape proche du carénage (17) et dans la zone inférieure des flasques (3 et 4) proche d'une plaque de fixation (23) les réunissant et formant le support fixe (5).

8. Dispositif selon l'une des revendications 1 à 7, dans lequel l'extrémité libre (25) du levier de manoeuvre (8) est recourbée vers l'intérieur selon un rayon de courbure « r » prédéterminé, de manière à améliorer son ergonomie.

## Claims

1. A winding device (1) for manual operation of a windable element, such as, for instance, cable, rope, film, cloth, web or tarpaulin, around a winding shaft or drum (2), said device including :
- a fixed support (5), defining two flanges (3, 4), between which is mounted rotatably a driving axle (6), capable of being slaved to said shaft or drum (2),
- a control lever (8), exhibiting a head (7), and mounted oscillating on said driving axle (6), between both said flanges (3, 4),
- a snap-on mechanism (11, 12, 13), co-operating with said driving device (6) and said control lever (8), for controlling the winding operation or the unwinding of said windable element, wherein the mechanism is arranged at said head (7) between said flanges (3, 4), said head (7) of the control lever (8) forming moreover a protective fairing (17) covering the snap-on mechanism (11, 12, 13), the head (7) of the control lever being formed by a cap exhibiting two branches (9, 10) arranged between both said flanges (3, 4) and between which branches is arranged a toothed gear (11), interconnected with said driving axle (6), said control lever (8) acting on said pinion (11) by means of a first ratchet (12), interconnected with the control lever (8), and co-operating with the toothed gear (11), for driving it rotation along an oscillating direction of the lever (8), and not in the other direction corresponding to its recall after disconnection toward its starting point, and of a second ratchet (13), also co-operating with the toothed gear (11), independently of the control lever (8), and enabling free rotational driving of the toothed gear (11) by meshing in an oscillating direction of the lever (8), and holding it in the other direction corresponding to its recall after disconnection, **characterised in that** the first ratchet (12) can be disconnected by means of a disconnection lever (18) articulated on a pivot pin (19), arranged between both branches (9 and 10) of the cap and off-centre relative to the driving axle (6), which lever extends from its joint (19) to the outside of the cap towards the control lever (8) under the fairing (17) from which it is capable of being housed along its longitudinal axis, during a disconnecting action.

2. A device according to claim 1, wherein the control lever (8) is formed by a globally U-shaped hollow element extending, on the one hand, by its lateral sides (14, 15) to form the branches (9, 10) of the cap forming its head (7), and on the one hand, by its backside (16) for connecting said branches (9, 10) at their upper portion, and obtaining, as a single unit, said protective fairing (17) covering simultaneously the toothed gear (11) and the first and second ratchets (12, 13).

3. A device according to claim 1 or 2, wherein the first ratchet (12) is recalled elastically by means of a compression spring (20), interposed between its disconnection lever (18) and the control lever (8).

4. A device according to any of the claims 1 to 3, wherein the lengths of the disconnection lever (18) and of the control lever (8) are respectively shorter and longer, so that the control lever (8) may be gripped fully by an operator, while leaving him the possibility of acting on the disconnection lever (18) with the same hand, so as to provide in one case as in the other an ergonomic grip of said device.

5. A device according to any of the claims 1 to 4, wherein the second ratchet (13) is mounted rotatably on a pivot pin (21), arranged between both flanges (3 and 4) forming the fixed support (5), independently of the control lever (8), which axle (21) is also off-centre relative to the driving axle (6).

6. A device according to claim 5, wherein the second ratchet (13) is recalled elastically by means of a compression spring (22), interposed between, on the one hand, an intermediate portion of said ratchet situated between its end (13a) and its joint (21), and on the one hand, a facing zone (23a) of a lower fastening plate (23) of the assembly, with which both flanges (3 and 4) are interconnected to form the fixed support (5).

7. A device according to claim 6, wherein both joint axles (19 and 21) of the first and second ratchets (12 and 13) are off-centre relative to the driving axle (6), towards the control lever (3), respectively in the upper zone of the cap close to the fairing (17) and in the lower zone of the flanges (3 and 4) close to a fastening plate (23) uniting them and forming the fixed bracket (5),

8. A device according to any of the claims 1 to 7, wherein the free end (25) of the control lever (8) is bent inwardly along a predetermined curving radius "r", for improved ergonomics.

## Patentansprüche

1. Handbetätigte Vorrichtung zum Aufwickeln (1) eines aufwickelbaren Elements, wie zum Beispiel eines Kabels, eines Seils, einer Folie, einer Wickelware, eines Gewebes oder einer Plane um eine Wickelwelle oder -trommel (2), wobei die besagte Vorrichtung folgendes umfasst:
- einen unbeweglichen Träger (5), der zwei seitliche Flächen (3, 4) bildet, zwischen denen drehend eine Antriebsachse (6) montiert ist, die geeignet ist, um an die besagte Welle oder Trommel (2) befestigt zu werden,
- einen Bedienungshebel (8), der einen Kopf (7) aufweist und schwingend auf der besagten Antriebsachse (6) zwischen den besagten beiden seitlichen Flächen (3, 4) montiert ist,
- einen Rastmechanismus (11, 12, 13), der mit der besagten Antriebsachse (6) und dem besagten Bedienungshebel (8) zusammenwirkt, um das Auf- oder Abwickeln des besagten aufwickelbaren Elements zu steuern, wobei der Mechanismus im Bereich des besagten Kopfes (7) zwischen den besagten seitlichen Flächen (3, 4) angeordnet ist, wobei der besagte Kopf (7) des Bedienungshebels (8) außerdem eine Schutzummantelung (17) bildet, die den Rastmechanismus (11, 12, 13) bedeckt, wobei der Kopf (7) des Bedienungshebels durch eine Gabelbefestigung gebildet sei, die zwei Schenkel (9, 10) aufweist, die zwischen den besagten beiden seitlichen Flächen (3, 4) angeordnet sind, und zwischen welchen Schenkeln ein Zahntrieb (11) angeordnet ist, der mit der besagten Antriebsachse (6) fest verbunden ist, wobei der besagte Bedienungshebel (8) auf den besagten Zahntrieb (11) über eine erste Schaltklinke (12), die mit dem Bedienungshebel (6) fest verbunden und mit dem Zahntrieb (11) zusammenwirkt, um es in Drehung nach einer Schwingrichtung des Hebels (8), und nicht nach der anderen Richtung, die seinem Rücksprung durch Auskupplung in Richtung auf seinen Ausgangspunkt entspricht, zu bewirken, und über eine zweite Schaltklinke (13), die ebenfalls mit dem Zahntrieb (11) zusammenwirkt, unabhängig von dem Bedienungshebel (8), und den freien Drehantrieb des Zahntriebs (11) durch Eingriff in einer Schwingrichtung des Hebels (8) und seine Zurückhaltung in der anderen Richtung, die seinem Rücksprung durch Auskupplung entspricht, erlaubt, **dadurch gekennzeichnet, dass** die erste Schaltklinke (12) über einen Auskupplungshebel (18) auskuppelbar ist, der an einer Gelenkachse (19) gelenkig verbunden ist, die zwischen den beiden Schenkeln (9 und 10) der Gabelbefestigung angeordnet und hinsichtlich der Antriebsachse (6) außermittig versetzt ist, welcher Hebel sich ab seiner Gelenkverbindung (19) nach der Außenseite der Gabelbefestigung in Richtung auf den Bedienungshebel (8) unter der Schutzummantelung (17) erstreckt, in der er geeignet ist, um sich nach seiner Längsachse bei einem Auskuppelungsvorgang zu positionieren.

2. Vorrichtung nach Anspruch 1, bei der der Bedienungshebel (8) durch ein hohles Bauteil mit einem im Allgemeinen U-förmigen Querschnitt gebildet ist, der sich, einerseits, durch seine seitlichen Seiten (14, 15) verlängert, um die Schenkel (9, 10) der Gabelbefestigung, diue seinen Kopf (7) bilden, zu bilden, und, andererseits, durch seinen Rücken (16), um die besagten Schenkel (9, 10) an ihrem oberen Teil zu verbinden und in einem Zuge die besagte Schutzummantelung (17) zu erhalten, die gleichzeitig den Zahntrieb (11) und die ersten und zweiten Schaltklinken (12, 13) bedeckt.

3. Vorrichtung nach Anspruch 1 oder 2, bei der die erste Schaltklinke (12) elastisch über eine Druckfeder (20) zurückgeschlagen ist, die zwischen ihrem Auskupplungshebel (18) und dem Bedienungshebel (8) eingesetzt ist.

4. Vorrichtung nach einem der Ansprüche 1 bis 3, bei der die Längen des Auskupplungshebels (18) und des Bedienungshebels (8) jeweils länger bzw. kürzer sind, derart, dass der Bedienungshebel (8) von einem Bediener mit voller Hand gefasst werden kann, während ihm die Möglichkeit gelassen wird, auf jenen zum Auskuppeln (18) mit derselben Hand zu wirken, um in beiden Fällen einen ergonomischen Zapfgriff der besagten Vorrichtung anzubieten.

5. Vorrichtung nach einem der Ansprüche 1 bis 4, bei der die zweite Schaltklinke (13) drehbar auf eine Gelenkachse (21) montiert ist, die zwischen den beiden seitlichen Flächen (3 und 4), die den unbeweglichen Träger (5) bilden, unabhängig von dem Bedienungshebel (8), angeordnet ist, wobei die besagte Antriebsachse (21) ebenfalls hinsichtlich der Antriebsachse (6) außermittig versetzt sei.

6. Vorrichtung nach Anspruch 5, bei der die zweite Schaltklinke (13) elastisch über eine Druckfeder (22) zurückgeschlagen ist, die zwischen, einerseits, einem Zwischenteil der besagten Schaltklinke, der zwischen ihrem Ende (13a) und ihrem Gelenk (21) angeordnet ist, und, andererseits, einem gegenüberliegenden Bereich (23a) einer unteren Platte zur Befestigung (23) der Gesamtheit, mit der die beiden seitlichen Flächen (3 und 4) fest verbunden sind, eingesetzt ist, um den unbeweglichen Träger (5) zu bilden.

7. Vorrichtung nach Anspruch 6, bei der die beiden Gelenkachsen (19 und 21) der ersten und zweiten Schaltklinken (12 und 13) außermittig hinsichtlich der Antriebsachse (6) in Richtung des Bedienungshebels (8), beziehungsweise im oberen Bereich der Gabelbefestigung nahe bei der Schutzummantelung (17) und im unteren Bereich der seitlichen Flächen (3 und 4) nahe bei einer Befestigungsplatte (23), die sie verbindet und den unbeweglichen Träger (5) bildet, versetzt sind.

8. Vorrichtung nach einem der Ansprüche 1 bis 7, bei der das freie Ende (25) des Bedienungshebels (8) nach innen nach einem vorbestimmten Krümmungsradius "r" gebogen ist, um seine Ergonomie zu verbessern.
